# EUROPÄISCHE PATENTSCHRIFT

(11) **EP 3 499 078 B1**
(45) Veröffentlichungstag und Bekanntmachung des Hinweises auf die Patenterteilung: **10.01.2024**
(21) Anmeldenummer: 18204809.0
(22) Anmeldetag: 07.11.2018
(51) Int. Cl.: F16F 1/38

(54) **GLEITLAGER**
SLIDE BEARING
PALIER LISSE

(30) Priorität: 14.12.2017 DE 102017129921; 12.10.2018 EP 18200052
(43) Veröffentlichungstag der Anmeldung: 19.06.2019
(73) Patentinhaber: CLAAS Selbstfahrende Erntemaschinen GmbH, 33428 Harsewinkel (DE)
(72) Erfinder: Lehmberg, Andreas, 33428 Harsewinkel (DE)
(74) Vertreter: CLAAS Gruppe

(56) Entgegenhaltungen:
- DE-A1-102014 220 291
- US-A1- 2001 010 367
- US-A1- 2016 290 428

## Beschreibung

Die vorliegende Erfindung betrifft ein Gleitlager gemäß dem Oberbegriff des Anspruchs 1. Des Weiteren betrifft die Erfindung eine landwirtschaftliche Arbeitsmaschine gemäß dem Oberbegriff des Anspruchs 7.

Gleitlager der eingangs genannten Art kommt zum elastischen Verbinden zweier Komponenten oder Baugruppen zur Anwendung, beispielsweise als Kabinenlager zur Schwingungsisolation einer durch eine landwirtschaftliche Arbeitsmaschine erzeugten maschinentypischen Schwingung von einem Maschinenrahmen auf eine Kabine. Ein solches Gleitlager weist eine äußere Lagerhülse und eine innere Lagerhülse auf, zwischen denen zumindest eine Dämpfungsschicht angeordnet ist, welche die äußere Lagerhülse und die innere Lagerhülse miteinander mechanisch koppelt.

Die von dem Gleitlager aufgenommenen mechanischen Belastungen führen im Verlauf der Einsatzdauer zu einem Verschleiß der aus zumindest einem Elastomer bestehenden Dämpfungsschicht, was sich in einer durchgängigen Rissbildung innerhalb der Dämpfungsschicht äußert, welche zum Versagen des Gleitlagers führt. Um den Verschleißzustand zu beurteilen, erfolgt eine oberflächliche Sichtprüfung an einer der Stirnflächen der Dämpfungsschicht. Da es aufgrund der mechanischen Belastung zu einer Rissbildung bzw. einem Abrieb an der Oberfläche kommt, wird dies bei oberflächlicher Sichtprüfung oftmals bereits als kritischer Verschleißzustand angesehen, obwohl das vermeintliche Schadensbild noch keinen Rückschluss auf den tatsächlichen Verschleißzustand des Gleitlagers zulässt. Entsprechend wird das Gleitlager vorsorglich getauscht, obwohl dessen Lebensdauer noch nicht überschritten ist.

Aus der Patentschrift DE 28 48 07 C ist ein Transmissionslager bekannt, an welchem ein Behältnis angeordnet ist, dass eine Signalflüssigkeit enthält, die einerseits Riechstoffe und zusätzlich einen Farbstoff enthält. Das Heißlaufen des Lagers führt zu einem Öffnen des Behältnisses, beispielsweise durch das Schmelzen eines Verschlusses, so dass neben dem Riechstoff zusätzlich der Farbstoff freigesetzt wird. Der Riechstoff liefert dabei den Hinweis auf einen Gefahrenzustand, während der Farbstoff die Lokation des betroffenen Lagers erleichtern soll. Das Austreten des Riech- und Farbstoffes tritt somit erst im eingetretenen Schadensfall auf.

US 2016/290428 A1 offenbart ein Gleitlager mit den Merkmalen des Oberbegriffs des Anspruchs 1.

Aufgabe der vorliegenden Erfindung ist es, ein Gleitlager der eingangs genannten Art derart weiterzubilden, dass der tatsächliche Verschleißzustand des Gleitlagers von außen erkennbar ist.

Diese Aufgabe wird erfindungsgemäß durch ein Gleitlager gemäß dem Anspruch 1 sowie eine landwirtschaftliche Arbeitsmaschine gemäß dem Anspruch 7 gelöst.

Vorteilhafte Weiterbildungen der Erfindung sind Gegenstand der Unteransprüche.

Es wird ein Gleitlager vorgeschlagen, welches eine äußere Lagerhülse und eine innere Lagerhülse aufweist, zwischen denen zumindest eine Dämpfungsschicht angeordnet ist, die aus wenigstens einem Elastomer besteht, wobei eine Stirnfläche des Gleitlagers zumindest partiell einsehbar ist, wobei in zumindest einem Abschnitt des die zumindest eine Dämpfungsschicht bildendenden Elastomers ein Indikatormittel eingebracht ist, welches bei einer Rissbildung in der zumindest einen Dämpfungsschicht an der Stirnseite optisch nachweisbar austritt. Hierdurch wird erreicht, dass durch eine einfache Sichtprüfung auf den tatsächlichen Verschleißzustand des Gleitlagers respektive der Dämpfungsschicht geschlossen werden kann, da ein Austreten des Indikatormittels erst dann auftritt, wenn sich die verschleißbedingte Rissbildung durch die Dämpfungsschicht fortgesetzt hat. Unter einem in das Elastomer eingebrachten Indikatormittel ist eine stoffliche Verbindung zwischen dem Indikatormittel und dem Elastomer zu verstehen. Die Einbringung ermöglicht eine vorgebbare Positionierung des Indikatormittels in der zumindest einen Dämpfungsschicht. Somit ist der Ort des Austretens des Indikatormittels an unterschiedliche Last- bzw. Einsatzgebiete anpassbar. Eine Ausbildung eines Hohlraums in der zumindest einen Dämpfungsschicht selbst wie auch in der Außenhülse oder Innenhülse ist nicht sinnvoll, da dadurch die Lagereigenschaften des Gleitlagers eingeschränkt würden. Grundsätzlich ist zumindest die Dämpfungsschicht an ihren Einsatzort bzw. Einbringungsraum angepasst ausgebildet. Die Dämpfungsschicht kann beispielsweise ringförmig ausgebildet sein.

Gemäß einer Weiterbildung kann das Indikatormittel als ein Farbstoff ausgeführt sein. Das Austreten des Farbstoffs signalisiert unmittelbar, dass ein Verschleißzustand vorliegt, der zu einem Versagen des Gleitlagers führt.

Alternativ oder zusätzlich kann das Indikatormittel einen fluoreszierenden Inhaltsstoff enthalten. So kann eine Sichtprüfung beispielsweise mittels einer Licht im kurzwelligen Bereich, insbesondere ultraviolettes Licht, emittierenden Lichtquelle vorgenommen werden, um bei dem aus dem Gleitlager ausgetretenen Elastomerpartikeln zwischen einem oberflächlichen Abrieb und dem Austreten von Elastomerpartikeln aus dem Inneren der Dämpfungsschicht unterscheiden zu können.

Gemäß der Erfindung ist das Indikatormittel durch Wärmeentwicklung aktivierbar.

Aufgrund der Rissbildung im Inneren der Dämpfungsschicht kommt es zu erhöhter Haftreibung und damit zu einer verstärkten Erwärmung. Diese kann genutzt werden, um das Indikatormittel in einer Weise zu aktivieren, so dass es an den Stirnflächen des Gleitlagers austritt durch eine Verflüssigung.

Gemäß einer bevorzugten Weiterbildung kann die zumindest eine Dämpfungsschicht aus einem ersten Elastomer bestehen, in welches ein zweites mit dem Indikatormittel versehenes Elastomer eingebettet ist. Hierbei kann sich das zweite Elastomer lediglich durch eine abweichende Farbgebung vom ersten Elastomer unterscheiden. Auf diese Weise bleiben die Lager- und Dämpfungseigenschaften unverändert erhalten, jedoch führt die verschleißbedingte Rissbildung dazu, dass neben dem ersten Elastomer auch das zweite, farblich abweichende Elastomer austritt, wodurch der Verschleißzustand eindeutig identifizierbar ist. Denkbar ist auch der Einsatz verschiedener Elastomere, die sich durch unterschiedliche Dämpfungseigenschaften auszeichnen können.

Insbesondere kann der Abschnitt innerhalb der zumindest einen Dämpfungsschicht, in welchen das Indikatormittel eingebracht ist, in Abhängigkeit von der Art der mechanischen Belastung der Dämpfungsschicht in dem Gleitlager positioniert sein. Entsprechend ihrer in den unterschiedlichen Anwendungsfällen des Gleitlagers auftretenden Hauptbelastung, axial, radial, kardanisch oder durch Torsion, und dem dadurch bedingten Verschleißverlauf, kann die Positionierung des Abschnitts innerhalb der zumindest einen Dämpfungsschicht unterschiedlich gewählt werden. Dabei kann die Positionierung des zumindest einen Abschnitts innerhalb der Dämpfungsschicht symmetrisch als auch asymmetrisch in Bezug auf die Geometrie des Gleitlagers erfolgen. Weiterhin kann die Positionierung zumindest zweier Abschnitte innerhalb der Dämpfungsschicht symmetrisch als auch asymmetrisch in Bezug auf die Anordnung der zumindest zwei Abschnitte zueinander erfolgen.

In einer vorteilhaften Ausgestaltung der Erfindung ist das Gleitlager als Hülsenlager ausgebildet, wobei das Hülsenlager eine Außenhülse und eine Innenhülse umfasst und die Dämpfungsschicht zwischen der Außenhülse und der Innenhülse angeordnet ist, sodass das Einsatzspektrum der erfindungsgemäßen Dämpfungsschicht erhöht wird.

Weiterhin betrifft die vorliegende Erfindung eine landwirtschaftliche Arbeitsmaschine.

Gemäß dem Anspruch 7 wird eine landwirtschaftliche Arbeitsmaschine mit durch zumindest ein Gleitlager elastisch verbundene Komponenten vorgeschlagen, wobei das zumindest eine Gleitlager nach einem der Ansprüche 1 bis 6 ausgebildet ist. Die Verwendung eines solchen Gleitlagers hat den Vorteil, dass ein vorzeitiger und damit unnötiger Austausch vermieden werden kann, da bei einer routinemäßigen Sichtprüfung der Verschleißzustand ohne weiteres erkennbar ist.

Bevorzugt kann die landwirtschaftliche Arbeitsmaschine als Traktor, selbstfahrender Mähdrescher oder Feldhäcksler ausgebildet sein. An diesen Arbeitsmaschinen kommen Gleitlager vielfach zur Anwendung.

Insbesondere können die verbundenen Komponenten als Förderboden, als Bauteile einer oszillierend angetrieben Reinigungsvorrichtung und/oder Abscheidevorrichtung des Mähdreschers ausgebildet sein. So werden beispielsweise bei der Reinigungsvorrichtung Schubstangen, mittels derer eine oszillierende Antriebsbewegung auf einen Siebrahmen übertragen werden, durch Gleitlager auf einer diese miteinander koppelnden Bolzen oder Welle gelagert. Eine Anlenkung eines Obersiebs der Reinigungsvorrichtung weist ebenfalls ein oder mehrere Gleitlager auf. Ein weiterer Anwendungsfall können Schwingen zur Lagerung von Förder- und Rücklaufboden des Mähdreschers sein. Die Gleitlager verbinden die jeweiligen Schwingen mit dem Förder- bzw. Rücklaufboden. Derartig verwendete Gleitlager sind insbesondere Belastungen durch Torsion sowie Querneigung ausgesetzt.

Weiterhin können die verbundenen Komponenten als eine Kabine und ein Maschinenrahmen der Arbeitsmaschine ausgebildet sein. So sind Gleitlager, die der Lagerung der Kabine dienen neben einer axialen Belastung einer Belastung durch Nickbewegungen der Kabine ausgesetzt.

Die vorliegende Erfindung wird nachstehend anhand eines in den Zeichnungen dargestellten Ausführungsbeispieles näher erläutert.

Es zeigen:
- Fig. 1: eine schematische Darstellung eines Gleitlagers in Seitenansicht
- Fig. 1a: eine schematische Darstellung eines Hülsenlagers in Seitenansicht;
- Fig. 2a, 2b: eine Schnittansicht eines Gleit- oder -Hülsenlagers gemäß Fig. 1 oder 1a;
- Fig. 3: eine schematische Ansicht einer landwirtschaftlichen Arbeitsmaschine;
- Fig. 4: eine Explosionsdarstellung einer Siebrahmenaufhängung.

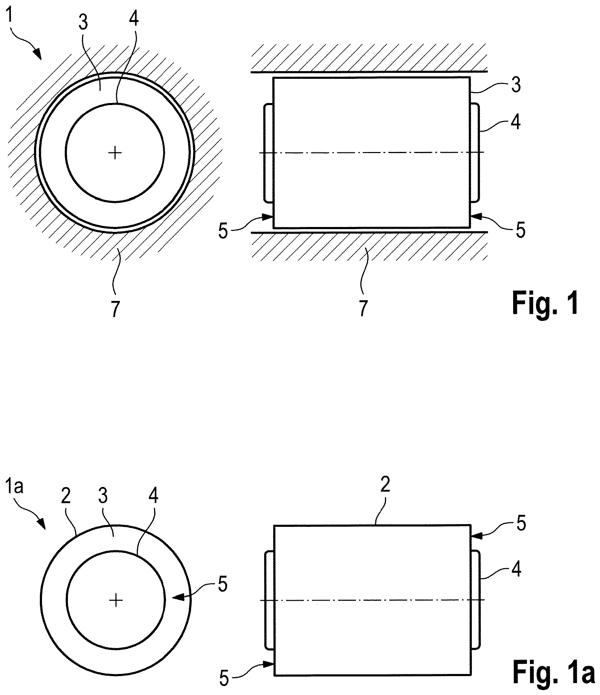

Fig. 1 zeigt eine schematische Darstellung eines Gleitlagers 1 in Seitenansicht sowie in einer Ansicht von oben. Das Gleitlager 1 ist als Verbundbauteil ausgebildet und umfasst eine Innenhülse 4 sowie eine ringförmige, aus einem Elastomer bestehende Dämpfungsschicht 3, wobei die ringförmige Dämpfungsschicht 3 zwischen Innenhülse 3 und dem jeweiligen Gestell 7 angeordnet ist. Mit Bezugszeichen 5 ist eine Stirnfläche der Dämpfungsschicht 3 bezeichnet, die, in Abhängigkeit von der Bauform des Gleitlagers 1, zumindest teileweise einsehbar ist. Das Gestell 7 ist im einfachsten Fall als eine an sich bekannte Lagerstelle ausgeführt, welche den Außenring der Gleitlagerung bildet.

Fig. 1a zeigt in Analogie zu Figur 1 eine schematische Darstellung eines als Hülsenlager 1a ausgeführten Gleitlagers 1 in Seitenansicht sowie in einer Ansicht von oben. Das Hülsenlager 1 a ist als Verbundbauteil ausgebildet und umfasst eine Außenhülse 2 sowie zumindest eine Innenhülse 4, zwischen denen zumindest eine ringförmige Dämpfungsschicht 3 angeordnet ist, die aus wenigstens einem Elastomer besteht. Mit Bezugszeichen 5 ist eine Stirnfläche der Dämpfungsschicht 3 bezeichnet, die, in Abhängigkeit von der Bauform des Hülsenlagers 1, zumindest teileweise einsehbar ist. Die Außenhülse 2 kann an ihren äußeren Enden gebördelt ausgeführt sein, so dass die Stirnfläche 5 der Dämpfungsschicht 3 abschnittsweise von einem sich in radialer Richtung erstreckenden Abschnitt der Außenhülse 2 umgriffen wird.

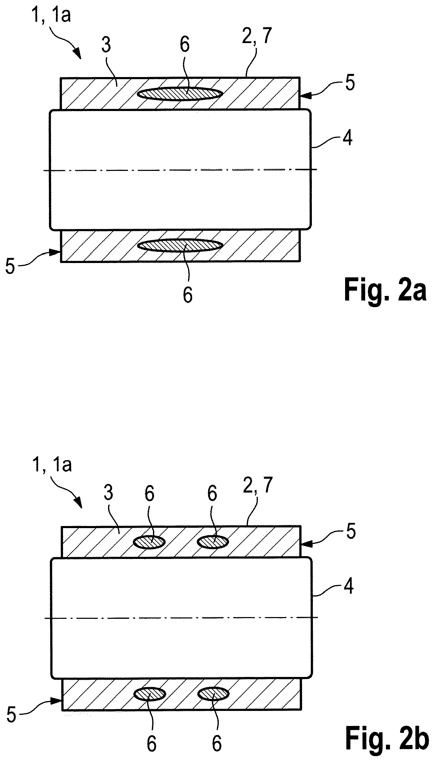

In Fig. 2a und Fig. 2b ist jeweils eine Schnittansicht des Gleit- oder Hülsenlagers 1, 1a dargestellt, wobei im Folgenden aus Vereinfachungsgründen nur von Gleitlager 1 gesprochen werden wird, wobei stets zugleich auch die Ausführung als Hülsenlager 1a einbezogen ist. Das in Fig. 2a dargestellte Gleitlager 1 zeigt eine erste Ausführungsform der Dämpfungsschicht 3. Dabei ist in zumindest einem, zumindest abschnittsweise umlaufenden Abschnitt 6 des die zumindest eine Dämpfungsschicht 3 bildendenden Elastomers ein Indikatormittel eingebracht. Dabei handelt es sich bevorzugt um eine Beimischung in das Elastomer, welche als Farbstoff oder fluoreszierender Inhaltsstoff ausgeführt ist. Fig. 2b zeigt eine zweite Ausführungsform, gemäß der zwei Abschnitte 6 vorgesehen sind, in die ein Indikatormittel eingebracht ist. Der Abschnitt 6 oder die mehreren Abschnitte 6 können auch aus einem eingebetteten Elastomer bestehen, welches sich zumindest durch eine abweichende Einfärbung auszeichnet. D.h., dass Elastomer des Abschnitts 6 oder der Abschnitte 6 ist identisch mit dem diese einschließenden Elastomer. Es können aber auch unterschiedliche Elastomere zum Einsatz kommen.

Die Positionierung des zumindest einen Abschnitts 6 innerhalb der Dämpfungsschicht kann symmetrisch als auch asymmetrisch in Bezug auf die Geometrie des Gleitlagers 1 erfolgen. Weiterhin kann die Positionierung zumindest zweier Abschnitte 6 innerhalb der Dämpfungsschicht 3 symmetrisch als auch asymmetrisch in Bezug auf die Anordnung der zumindest zwei Abschnitte 6 zueinander erfolgen.

Aufgrund dynamischer Belastungen kommt es im Laufe der Zeit in dem Gleitlager 1 zu einer Rissbildung in der Dämpfungsschicht 3. Eine Überprüfung des Gleitlagers 1 erfolgt dabei im Allgemeinen jedoch nur im Rahmen einer Sichtprüfung der zumindest teilweise einsehbaren Stirnflächen 5 der Dämpfungsschicht 3. Die an der Oberfläche der Dämpfungsschicht 3 auftretenden Risse bzw. der Abrieb im Bereich des Gleitlagers 1 stellt kein zuverlässiges Kriterium dar, um den tatsächlichen Verschleißzustand abschließend beurteilen zu können. Ein Totalausfall des Gleitlagers 1 stellt sich insbesondere dann ein, wenn die Dämpfungsschicht 3 einen in axialer Richtung zumindest nahezu durchgehend verlaufenden Riss aufweist. Dennoch werden die Gleitlager 1 aufgrund des oberflächlichen Schadenbildes ausgetauscht, obwohl deren Verschleißzustand einen Austausch noch nicht erforderlich werden lässt.

Um einen solchen Riss, der zu einem Totalausfall des Gleitlagers 1 führen kann, von außen sichtbar zu machen, kommt das in das Elastomer der Dämpfungsschicht 3 eingebrachte Indikatormittel zum Tragen. Erstreckt sich ein Riss von dem zumindest einen Abschnitt 6 bis zu den Stirnflächen 5 des Gleitlagers 1, so kommt es zu einem Austritt des Indikatormittels an der oder den Stirnflächen 5. Aufgrund der Färbung oder wegen der fluoreszierenden Eigenschaft des Indikatormittels, ist das Austreten des Indikatormittels aus dem Inneren der Dämpfungsschicht 3 optisch nachweisbar. Auf diese Weise kann ein erforderlicher Austausch des Gleitlagers 1 zu einem Zeitpunkt vorgenommen werden, zu welchem mit einem tatsächlichen Ausfall des Gleitlagers 1 zu rechnen ist. Denkbar ist auch ein Rissverlauf in im Wesentlichen radialer Richtung, so dass das Indikatormittel im Bereich zwischen der Dämpfungsschicht 3 und der Außenhülse 2 oder Innenhülse 4 nach au-ßen gelangt und an der Stirnfläche 6 austritt.

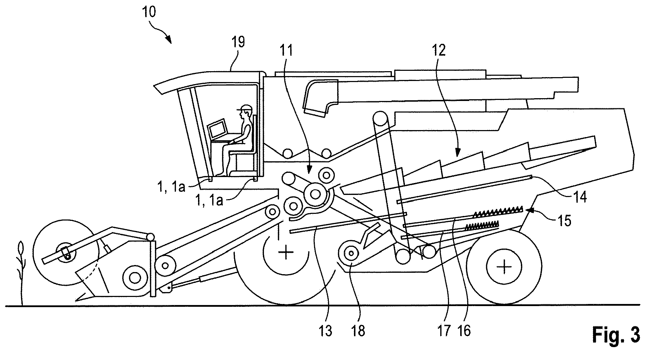

In Fig. 3 ist eine als selbstfahrender Mähdrescher 10 ausgeführte landwirtschaftliche Arbeitsmaschine mit einer nach dem Tangentialflussprinzip arbeitenden Drescheinrichtung 11 und einem dahinter angeordneten Hordenschüttler 12 als Abscheidevorrichtung dargestellt. Anstelle des Hordenschüttlers 12 kann auch eine nach dem Axialflussprinzip arbeitende Abscheideeinrichtung in Form zumindest eines Abscheiderotors zur Anwendung kommen. Unterhalb der Drescheinrichtung 11 befindet sich ein oszillierender Förderboden 13, der ausgedroschenes Erntegut aufnimmt und in Richtung einer Reinigungsvorrichtung 15 transportiert und an diese abgibt. Unterhalb des Hordenschüttlers 12 befindet sich ein ebenfalls oszillierender Rücklaufboden 14, der von dem Hordenschüttler 12 abgegebenes Erntegut an den Förderboden 13 übergibt. Die Reinigungsvorrichtung 15 besteht aus zwei übereinander angeordneten Sieben 16, 17 und einem Gebläse 18. Der Mähdrescher 10 umfasst eine Kabine 19, die durch eine Anordnung von erfindungsgemä-ßen Gleitlagern 1, 1a auf einem Rahmenabschnitt des Mähdreschers 10 gelagert ist.

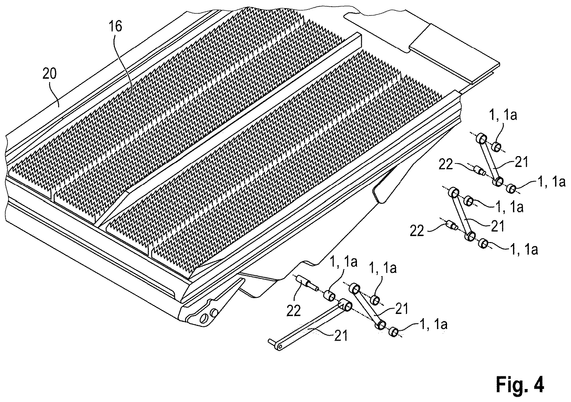

Fig. 4 zeigt eine Explosionsdarstellung einer Siebrahmenaufhängung, die der Aufnahme der Siebe 16 und 17 der Reinigungsvorrichtung 15 dient. Die Siebrahmenaufhängung weist einen Siebrahmen 20 auf, welcher durch Schubstangen 21 mit Aktoren gekoppelt ist, welche eine oszillierende Bewegung erzeugen, die auf den Siebrahmen 20 übertragen wird. Die Schubstangen 21 weisen endseitig ein Lagerauge auf, in welchem jeweils ein erfindungsgemäßes Gleitlager 1, 1a angeordnet ist. Die Gleitlager 1, 1a werden mit ihrer Innenhülse 4 auf Bolzen 22 aufgeschoben, um beispielsweise zwei Schubstangen 21 miteinander gelenkig zu verbinden.

Der Mähdrescher 10 weist üblicherweise seitliche Verkleidungselemente auf, die um eine horizontal verlaufende Schwenkachse hochschwenkbar sind, so dass die dahinter liegenden Arbeitsaggregate einsehbar sind. Auf diese Weise sind auch die Gleitlager 1, 1a respektive zumindest eine ihrer Stirnflächen 5 einer optischen Verschleißkontrolle zugänglich.

### Bezugszeichenliste

- 1: Gleitlager
- 1a: Hülsenlager
- 2: Außenhülse
- 3: Dämpfungsschicht
- 4: Innenhülse
- 5: Stirnfläche
- 6: Abschnitt
- 7: Gestell
- 10: Mähdrescher
- 11: Drescheinrichtung
- 12: Hordenschüttler
- 13: Förderboden
- 14: Rücklaufboden
- 15: Reinigungsvorrichtung
- 16: Sieb
- 17: Sieb
- 18: Gebläse
- 19: Kabine
- 20: Siebrahmen
- 21: Schubstangen
- 22: Bolzen

## Patentansprüche

1. Gleitlager (1), welches zumindest eine Innenhülse (4) aufweist, welche von zumindest einer Dämpfungsschicht (3) ummantelt ist, die aus wenigstens einem Elastomer besteht, wobei eine Stirnfläche (5) des zumindest einen Gleitlagers (1) einsehbar ist, wobei in zumindest einem Abschnitt (6) des die zumindest eine Dämpfungsschicht (3) bildendenden Elastomers ein Indikatormittel eingebracht ist, welches bei einer Rissbildung in der zumindest einen Dämpfungsschicht (3) an der Stirnfläche (5) optisch nachweisbar austritt, **dadurch gekennzeichnet, dass** das Indikatormittel durch Wärmeentwicklung aktivierbar ist, so dass das Indikatormittel durch Verflüssigung an der Stirnfläche des Gleitlagers austritt.

2. Gleitlager (1) nach Anspruch 1, **dadurch gekennzeichnet, dass** das Indikatormittel als ein Farbstoff ausgeführt ist.

3. Gleitlager (1) nach Anspruch 1 oder 2, **dadurch gekennzeichnet, dass** das Indikatormittel einen fluoreszierenden Inhaltsstoff enthält.

4. Gleitlager (1) nach einem der Ansprüche 1 bis 4, **dadurch gekennzeichnet, dass** die zumindest eine Dämpfungsschicht (3) aus einem ersten Elastomer besteht, in welches ein zweites mit dem Indikatormittel versehenes Elastomer eingebettet ist.

5. Gleitlager (1) nach einem der Ansprüche 1 bis 4, **dadurch gekennzeichnet, dass** der zumindest eine Abschnitt (6) in Abhängigkeit von der Art der mechanischen Belastung der zumindest einen Dämpfungsschicht in dem Gleitlager (1) positioniert ist.

6. Gleitlager (1) nach einem der vorhergehenden Ansprüche, **dadurch gekennzeichnet, dass** das Gleitlager (1) als Hülsenlager (1a) ausgebildet ist und das Hülsenlager (1a) eine Außenhülse (2) und eine Innenhülse (4) umfasst, wobei die Dämpfungsschicht (3) zwischen der Außenhülse (2) und der Innenhülse (4) angeordnet ist.

7. Landwirtschaftliche Arbeitsmaschine (10) mit durch zumindest ein Gleitlager (1) elastisch verbundenen Komponenten, **dadurch gekennzeichnet, dass** das zumindest eine Gleitlager (1) nach einem der Ansprüche 1 bis 6 ausgebildet ist.

8. Landwirtschaftliche Arbeitsmaschine (10) nach Anspruch 7, **dadurch gekennzeichnet, dass** die landwirtschaftliche Arbeitsmaschine als Traktor, selbstfahrender Mähdrescher (10) oder Feldhäcksler ausgebildet ist.

9. Landwirtschaftliche Arbeitsmaschine (10) nach Anspruch 8, **dadurch gekennzeichnet, dass** die verbundenen Komponenten als Förderboden (13, 14), als Bauteile (20) einer oszillierend angetrieben Reinigungsvorrichtung (15) und/oder Abscheidevorrichtung (12) des Mähdreschers (10) ausgebildet sind.

10. Landwirtschaftliche Arbeitsmaschine (10) nach Anspruch 7 bis 9, **dadurch gekennzeichnet, dass** die verbundenen Komponenten als eine Kabine (19) und ein Maschinenrahmen der Arbeitsmaschine (10) ausgebildet sind.

## Claims

1. Plain bearing (1), which has at least one inner sleeve (4) which is surrounded by at least one damping layer (3) which consists of at least one elastomer, an end face (5) of the at least one plain bearing (1) being visible, an indicator agent being introduced into at least one section (6) of the elastomer forming the at least one damping layer (3), which, in the event of crack formation in the at least one damping layer (3), emerges at the end face (5) in an optically detectable manner, **characterized in that** the indicator agent can be activated by heat development, so that the indicator agent emerges at the end face of the plain bearing by liquefaction.

2. Plain bearing (1) according to claim 1, **characterised in that** the indicator agent is implemented as a dye.

3. Plain bearing (1) according to claim 1 or 2, **characterised in that** the indicator agent contains a fluorescent ingredient.

4. Plain bearing (1) according to one of claims 1 to 4, **characterised in that** the at least one damping layer (3) consists of a first elastomer in which a second elastomer provided with the indicator agent is embedded.

5. A plain bearing (1) according to any one of claims 1 to 4, **characterised in that** the at least one portion (6) is positioned in the plain bearing (1) in dependence on the type of mechanical loading of the at least one damping layer.

6. Plain bearing (1) according to one of the preceding claims, **characterised in that** the plain bearing (1) is designed as a sleeve bearing (1a) and the sleeve bearing (1a) comprises an outer sleeve (2) and an inner sleeve (4), the damping layer (3) being arranged between the outer sleeve (2) and the inner sleeve (4).

7. Agricultural machine (10) with components elastically connected by at least one plain bearing (1), **characterised in that** the at least one plain bearing (1) is constructed according to one of the claims 1 to 6.

8. Agricultural machine (10) according to claim 7, **characterised in that** the agricultural machine is designed as a tractor, self-propelled combine harvester (10) or forage harvester.

9. Agricultural machine (10) according to claim 8, **characterised in that** the connected components are formed as conveyor floor (13, 14), as components (20) of an oscillatingly driven cleaning device (15) and/or separating device (12) of the combine harvester (10).

10. Agricultural machine (10) according to claim 7 to 9, **characterised in that** the connected components are formed as a cabin (19) and a machine frame of the working machine (10).

## Revendications

1. Palier glisseur (1) qui comporte au moins une douille intérieure (4) qui est entourée par au moins une couche d'amortissement (3) qui est constituée au moins d'un élastomère, une face frontale (5) du au moins un palier glisseur (1) étant visible, dans au moins une portion (6) de l'élastomère formant la au moins une couche d'amortissement (3) étant inséré un moyen indicateur qui, lors d'une formation de fissure dans la au moins une couche d'amortissement (3), apparaît de manière optiquement décelable au niveau de la face frontale (5), **caractérisé en ce que** le moyen indicateur est activable par dégagement de chaleur, de sorte que le moyen indicateur apparaît par liquéfaction au niveau de la face frontale du palier glisseur.

2. Palier glisseur (1) selon la revendication 1, **caractérisé en ce que** le moyen indicateur est conformé en colorant.

3. Palier glisseur (1) selon la revendication 1 ou 2, **caractérisé en ce que** le moyen indicateur contient un constituant fluorescent.

4. Palier glisseur (1) selon une des revendications 1 à 4, **caractérisé en ce que** la au moins une couche d'amortissement (3) est constituée d'un premier élastomère dans lequel est noyé un second élastomère muni d'un moyen indicateur.

5. Palier glisseur (1) selon une des revendications 1 à 4, **caractérisé en ce que** la au moins une portion (6) est positionnée dans le palier glisseur (1) en fonction de la nature de la charge mécanique de la au moins une couche d'amortissement.

6. Palier glisseur (1) selon une des revendications précédentes, **caractérisé en ce que** le palier glisseur (1) est conformé en palier à douille (1a) et le palier à douille (1a) inclut une douille extérieure (2) et une douille intérieure (4), la couche d'amortissement (3) étant disposée entre la douille extérieure (2) et la douille intérieure (4).

7. Machine de travail agricole (10) comprenant des composants reliés par l'intermédiaire d'au moins un palier glisseur (1), **caractérisée en ce que** le au moins un palier glisseur (1) est conformé selon une des revendications 1 à 6.

8. Machine de travail agricole (10) selon la revendication 7, **caractérisée en ce que** la machine de travail agricole est conformée en tracteur, moissonneuse-batteuse automotrice (10) ou ensileuse.

9. Machine de travail agricole (10) selon la revendication 8, **caractérisée en ce que** les composants reliés sont conformés en table de préparation (13, 14), en éléments structurels (20) d'un dispositif de nettoyage (15) et/ou dispositif de séparation (12) entraînés de manière oscillante de la moissonneuse-batteuse (10) .

10. Machine de travail agricole (10) selon la revendication 7 à 9, **caractérisée en ce que** les composants reliés sont conformés en une cabine (19) et en un bâti de machine de la machine de travail (10).
